(19)

Europäisches
Patentamt
European
Patent Office
Office européen
des brevets

(11) **EP 4 258 450 A2**

(12) # EUROPEAN PATENT APPLICATION

(43) Date of publication:
**11.10.2023 Bulletin 2023/41**

(21) Application number: **23166974.8**

(22) Date of filing: **06.04.2023**

(51) International Patent Classification (IPC):
***H01M 50/446*** (2021.01)

(52) Cooperative Patent Classification (CPC):
**H01M 50/446**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 KR 20220043964
27.03.2023 KR 20230039491**

(71) Applicants:
 • **SK Innovation Co., Ltd.
Seoul 03188 (KR)**
 • **SK ie technology Co., Ltd.
Jongno-gu
Seoul
03188 (KR)**

(72) Inventors:
 • **KIM, Yun Bong
34124 Daejeon (KR)**
 • **OH, Eun Ji
34124 Daejeon (KR)**
 • **LEE, Chang Hee
34124 Daejeon (KR)**
 • **CHO, Kyu Young
34124 Daejeon (KR)**

(74) Representative: **Prüfer & Partner mbB
Patentanwälte · Rechtsanwälte
Sohnckestraße 12
81479 München (DE)**

(54) **SEPARATOR AND ELECTROCHEMICAL DEVICE COMPRISING THE SAME**

(57)     Provided are a separator and an electrochemical device including the same. According to one embodiment, a separator including: a porous substrate; and a coating layer provided on one or both surfaces of the porous substrate may be provided, wherein the coating layer includes inorganic particles, a particulate polymer binder, and an aqueous polymer binder, and the separator has a Ga/Gc value represented by the following Equation (1) of 0.2 to 0.75:

$$(1)\ Ga/Gc \tag{1}$$

wherein Ga is a surface gloss of the coating layer, and Gc is a surface gloss of a coating layer of a separator in which the coating layer including 90.0 to 99.9 wt% of inorganic particles having an average particle diameter of 100 to 500 nm, BET of 15 to 20 $m^2$/g, and a bulk density of 200 to 300 kg/$m^3$ and 0.1 to 10 wt% of an aqueous polymer binder is provided at a thickness of 3 um or less on the porous substrate.

EP 4 258 450 A2

**Description**

**TECHNICAL FIELD**

The following disclosure relates to a separator and an electrochemical device comprising the same. Specifically, the following disclosure relates to a separator having improved electrode adhesion while also securing sufficient thermal resistance such as a heat shrinkage at a high temperature, and an electrochemical device comprising the same.

**BACKGROUND**

As a method for solving a problem of high temperature stability of a separator, a method of coating a porous substrate on one or both surfaces of an existing separator with inorganic particles and a polymer binder slurry composition has been suggested in order to improve heat resistance. A ceramic coated separator (CSS), on which a porous inorganic particle layer which is formed by connecting the inorganic particles to each other on one or both surfaces of the porous substrate and has pores formed between the inorganic particles is formed by the method has a low heat shrinkage at a high temperature and has excellent heat resistance, and thus, is applied to a large battery system for EV.

However, the ceramic coated separator has insufficient adhesion to an electrode, so that a separator and an electrode are separated during a cell assembly process to cause distortion, deformation, or the like of an electrode assembly structure. Specifically, for example, a problem of misalignment between an electrode and a separator in a jelly roll may arise during cell stacking. During the operation of a battery using a stack cell having a misalignment problem, an interelectrode short circuit may occur and a safety problem such as fire may arise, and thus, the problem should be improved for battery stability.

Among the methods for improving the adhesion of the separator, representatively, a method of further providing an adhesive organic layer (thermal fusion layer) in addition to the inorganic particle layer has been suggested. However, since the method has a troublesome problem of further providing a separate adhesive organic layer and requires a plurality of coating processes, facility and process costs may be excessive, and there is also a possibility of not securing a sufficient heat shrinkage at a high temperature.

That is, a study of a separator, which may improve electrode adhesion while securing physical properties at a level equivalent to or higher than those of the existing separator such as heat resistance of a low heat shrinkage at a high temperature which is an advantage of a ceramic coated separator is still insufficient. In particular, there is an urgent need to develop a separator which satisfies both of excellent heat resistance and electrode adhesion without further providing a separate adhesive organic layer (thermal fusion layer) in addition to an inorganic particle.

The separator according to one implementation satisfies a surface gloss ratio according to Equation (1), thereby having improved electrode adhesion while securing sufficient heat resistance such as a heat shrinkage at a high temperature. In particular, both excellent heat resistance and electrode adhesion may be satisfied without further providing a separate adhesive organic layer (thermal fusion layer).

**SUMMARY**

An embodiment of the present disclosure is directed to providing a separator which has improved electrode adhesion while also securing sufficient heat resistance such as a heat shrinkage at a high temperature, and an electrochemical device comprising the same.

In one general aspect, a separator comprises: a porous substrate; and a coating layer provided on one or both surfaces of the porous substrate, wherein the coating layer comprises inorganic particles and a polymer binder, and the separator has a Ga/Gc value represented by the following Equation (1) of 0.2 to 0.75:

$$(1) \quad Ga/Gc$$

wherein Ga is a surface gloss of the coating layer, and Gc is a surface gloss of a coating layer of a separator in which the coating layer comprising 90.0 to 99.9 wt% of inorganic particles having an average particle diameter of 100 to 500 nm, BET of 15 to 20 $m^2$/g, and a bulk density of 200 to 300 $kg/m^3$ and 0.1 to 10 wt% of an aqueous polymer binder is provided at a thickness of 3 um or less on the porous substrate.

In addition, according to one embodiment, the Ga value may be 16 to 55 GU.

In addition, according to one embodiment, the polymer binder may comprise a particulate polymer binder and/or an aqueous polymer binder.

When the coating layer of the separator according to one embodiment comprises the particulate polymer binder,

a ratio of a particle diameter D50 of the particulate polymer binder to a thickness of the coating layer may be 1 to 5, the particle diameter D50 of the particulate polymer binder may be more than 1 um and 10 um or less; and the particulate polymer binder may have a glass transition temperature Tg of 50 to 70°C.

In addition, when the coating layer according to one embodiment comprises both the particulate polymer binder and the aqueous polymer binder as the polymer binder, the coating layer may comprise: 88 wt% or more of the inorganic particles, 1.6 to 8 wt% of the particulate polymer binder, and more than 0 wt% and 5 wt% or less of the aqueous polymer binder.

In addition, according to one embodiment, the aqueous polymer binder may comprise one or two or more of hydroxypropyl methylcellulose (HPMC), hydroxyethyl methylcellulose (HEMC), hydroxyethyl cellulose (HEC), carboxymethyl cellulose (CMC), polyvinylpyrrolidone (PVP), polyvinyl alcohol (PVA), polyacrylate (PA), and polyacrylamide (PAM).

In addition, the separator according to one embodiment may have heat shrinkages in both the MD direction and the TD direction of 5% or less, as measured after standing at 150°C for 1 hour.

In addition, according to one embodiment, the inorganic particles may comprise any one or more selected from the group consisting of metal oxides, metal nitrides, metal carbides, metal carbonates, metal hydroxides, and metal carbonitrides. Preferably, the inorganic particles may comprise boehmite.

In addition, according to one embodiment, the particulate polymer binder may comprise an acryl-based polymer.

In another general aspect, an electrochemical device comprises the separator according to one of the embodiments described above.

Other features and aspects will be apparent from the following detailed description, the drawings, and the claims.

## DETAILED DESCRIPTION OF EMBODIMENTS

Advantages and features of one implementation and methods to achieve them will become apparent from the following exemplary embodiments described in detail. However, one implementation may be modified in many different forms and it should not be limited to the embodiments set forth herein. Detailed description for carrying out one implementation will be provided.

Unless otherwise defined herein, all terms used in the present specification (comprising technical and scientific terms) may have the meaning that is commonly understood by those skilled in the art disclosed in the present specification. Throughout the present specification, unless explicitly described to the contrary, "comprising" any elements will be understood to imply further inclusion of other elements rather than the exclusion of any other elements. In addition, unless explicitly described to the contrary, a singular form comprises a plural form herein. In the present specification, it will be understood that when an element such as a layer, film, region, or substrate is referred to as being "on" or "above" another element, it can be "directly on" the other element or intervening elements may also be present.

In the present specification, "particle diameter of particulate polymer binder" or "average particle diameter" may refer to D50, and D50 refers to a particle diameter when a volume cumulated from the smallest particle is 50% in measurement of a particle size distribution by the Coulter principle. Herein, D50 may be derived from particle size distribution results analyzed using Multisizer 4e Coulter counter available from Beckman Coulter by collecting a sample of particles to be measured in accordance with the standard of KS A ISO 13320-1.

In the present specification, "separator thickness" may refer to a total thickness of the produced coating layer-porous substrate separator, or may be measured by the following method. According to an example, the "separator thickness" may be derived by overlapping a separator in 10 layers, measuring each thickness at 5 random points in the TD direction by a thickness meter available from Mitutoyo, dividing the value by 5 to derive an average thickness of the 10-layer separator, and dividing the value by 10 again to derive an average thickness of a single separator.

According to one embodiment, a separator comprising: a porous substrate; and a coating layer provided on one or both surfaces of the porous substrate may be provided, wherein the coating layer comprises inorganic particles and a polymer binder, and the separator has a Ga/Gc value represented by the following Equation (1) of 0.2 to 0.75:

$$(1) \ \ Ga/Gc$$

In Equation (1), Ga is a surface gloss of the coating layer, and Gc is a surface gloss of a coating layer of a separator in which the coating layer comprising 90.0 to 99.9 wt% of inorganic particles (for example, boehmite particles) having an average particle diameter of 100 to 500 nm, BET of 15 to 20 $m^2$/g, and a bulk density of 200 to 300kg/$m^3$ and 0.1 to 10 wt% of an aqueous polymer binder (for example, polyacrylamide, PAM) is provided at a thickness of 3 um or less on the porous substrate.

In one embodiment, the polymer binder may comprise any one or more of a particulate polymer binder and an aqueous polymer binder.

As a result of repeated studies by the inventors, in a separator comprising a coating layer comprising inorganic particles and a polymer binder, when the surface gloss of the coating layer satisfies a specific Ga/Gc value range, electrode adhesion may be improved while securing physical properties at a level equal to or higher than those of the existing separator, for example, sufficient heat resistance such as a heat shrinkage at a high temperature, sufficient air permeability, and the like.

The heat resistance and the electrode adhesion of the electrode implemented in one implementation are achieved by allowing the surface gloss ratio of the coating layer to satisfy Equation (1), and the means of achieving the surface gloss as Equation (1) is not particularly limited. For example, the polymer binder comprised in the coating layer is used to make an adjustment so that Equation (1) is satisfied. For example, the particulate polymer binder is used in the coating layer, the shape (spherical, non-spherical), the kind of monomer, the particle diameter, the ratio with a coating layer thickness, the glass transition temperature, and the like of the particulate polymer binder may be adjusted to achieve Equation (1), or when the aqueous polymer binder is used, the kind of monomer, the kind of functional group, the polymerization method, and the like may be adjusted to achieve Equation (1). Otherwise, for example, the particle size comprised in the coating layer and the surface roughness depending on the particle size of an inorganic material may be adjusted to achieve Equation (1) .

For example, when the coating layer comprises the particulate polymer binder, the distribution of the particulate polymer binder in the coating layer, the size of the particulate polymer binder, the specific gravity and distribution of the particulate polymer binder provided by protruding out of a coating layer surface, the distribution and the size of the inorganic particles with high contribution to heat resistance such as a heat shrinkage at a high temperature in the coating layer, and the like may affect the Ga/Gc value.

In one embodiment, as the Ga/Gc value is lower, the electrode adhesion tends to be better, but when the Ga/Gc value is unduly low, heat resistance tends to be deteriorated. Therefore, considering the descriptions above, the Ga/Gc value is needed to be properly adjusted. According to one embodiment, when the Ga/Gc value is more than 0.75, electrode adhesion is deteriorated, and when the Ga/Gc value is less than 0.2, heat resistance and heat shrinkage may be deteriorated. Considering the descriptions above, the Ga/Gc value may be 0.25 to 0.75, 0.2 to 0.7, 0.2 to 0.5, 0.2 to 0.4, 0.25 to 0.5, or 0.25 to 0.4, but is not particularly limited thereto.

According to one embodiment, the surface gloss of the Ga and Gc values may be derived as an average value after measuring each surface gloss at 5 random points on the surface of the separator coating layer with surface gloss measuring equipment, which is Micro TRI-Gloss available from BYK.

The surface gloss may be measured at, for example, 20° to 95°, 30° to 90°, 40° to 90°, 60° to 90°, 70° to 90°, 80° to 90°, or about 85° on the surface. In one embodiment, the surface gloss may be a value measured at 20° to 95° on the surface of the coating layer, preferbly at 70° to 90° on the surface of the coating layer, more preferably at 85° on the surface of the coating layer.

However, this is an example and the present disclosure is not particularly limited thereto.

The Ga only needs to satisfy the Ga/Gc value range, and is not particularly limited, but according to an example, the Ga may be 16 to 55 Gu, 18 to 55 Gu, 16 to 52 Gu, or 18 to 52 Gu.

The Gc only needs to be a surface gloss of the separator coating layer, the coating layer comprising 90.0 to 99.9 wt% of inorganic particles having an average particle diameter of 100 to 500 nm, BET of 15 to 20 $m^2$/g, and a bulk density of 200 to 300 kg/$m^3$ and 0.1 to 10 wt% of an aqueous polymer binder and being provided at a thickness of 3 um or less on the porous substrate, and is not particularly limited. However, according to an example, the coating layer may be a coating layer of a separator which is provided by the following method, and the separator may be a separator provided by adding water to a mixture of 90.0 to 99.9 wt% of boehmite particles having an average particle diameter of 100 to 500 nm, BET of 15 to 20 $m^2$/g, and a bulk density of 200 to 300 kg/$m^3$ as inorganic particles and 0.1 to 10 wt% of polyacrylamide (PAM) as an aqueous polymer binder and stirring the solution to prepare a coating solution slurry, using a polyolefin microporous substrate having a thickness of 9 um and a Gurley permeability of 126 s as a porous substrate, and bar-coating both surfaces of the porous substrate with the prepared coating solution slurry at a speed of 5 m/min, drying it with a hot air dryer at 40°C, and winding it in a roll form.

The inorganic particles comprised in the coating layer of the separator for deriving the Gc value may be comprised at 95 to 99.9 wt%, 95 to 99 wt%, or about 97 wt%, and the aqueous polymer binder may be comprised at 1 to 10 wt%, 1 to 5 wt%, or about 3 wt%.

Hereinafter, each component of the separator according to one implementation will be described.

According to an example, the porous substrate may be a polyolefin-based porous substrate. According to another example, any porous substrate may be used without particular limitation, as long as it is a porous substrate which has a porous structure comprising inorganic particles in the internal pores or on the surface, such as sheet, woven fabric, non-woven fabric, and paper and may be applied to a battery.

The material of the porous substrate is not particularly limited, but specifically, may comprise one or more or two or more resins of, for example, polyolefins such as polyethylene and polypropylene, polyesters such as polyethylene terephthalate and polybutylene terephthalate, polyacetal, polyamide, polyimide, polycarbonate, polyether ether ketone, polyarylether ketone, polyetherimide, polyamideimide, polybenzimidazole, polyethersulfone, polyphenylene oxide, cyclic olefin copolymers, polyphenylene sulfide, polyethylene naphthalate, glass fiber, Teflon, and polytetrafluoroethylene.

According to one embodiment, the porous substrate is commonly used in the art and may be a polyolefin-based porous substrate, but is not limited thereto. More specifically, the porous substrate may be preferably a polyolefin-based porous substrate which may be adjusted for pore refinement, but it should be noted that the porous substrate is not limited thereto.

The polyolefin-based porous substrate is usually produced in the form of a film and is not limited as long as it is usually used as a separator of a lithium secondary battery, and an example thereof comprises polyethylene, polypropylene, copolymers thereof, and the like, but is not necessarily limited thereto.

According to an example, the porous substrate may comprise a polyolefin-based resin alone, or a polyolefin-based resin as a main component and further inorganic particles or organic particles. In addition, the porous substrate may be formed of multiple layers of polyolefin-based resin, and any one or two or more layers of the porous substrate formed of multilayers may be polyolefin-based resin comprising inorganic particles or organic particles.

The thickness of the porous substrate is not particularly limited, but for example, may be 5 to 30 um or 5 to 20 um. According to an example, the porous substrate may be a porous polymer substrate produced by stretching.

According to an example, the coating layer may comprise inorganic particles and a polymer binder. For example, the coating layer may comprise inorganic particles and a particulate polymer binder; inorganic particles and an aqueous polymer binder; or inorganic particles, a particulate polymer binder, and an aqueous polymer binder.

According to an example, the coating layer may be a porous coating layer in which the inorganic particles in the coating layer are provided by being connected to each other by the polymer binder and a plurality of pores are formed between the inorganic particles. In addition, though not particularly limited, the coating layer may be an inorganic particle coating layer comprising inorganic particles as a main component. Though not particularly limited, the porous coating layer may have a porosity of, as a non-limiting example, 20 to 80% or 30 to 70%.

It is preferred that the thickness of the coating layer is appropriately adjusted for securing the high energy density of a battery, and according to an example, the coating layer may have a thickness of 5 um or less, 4 um or less, 3 um or less, or 2.8 um or less, and for improving heat resistance and electrode adhesion, 0.1 um or more, 0.5 um or more, 1 um or more, or 1.5 um or more, but is not particularly limited thereto.

Though not particularly limited, the thickness of the coating layer may be derived by the following method. According to an example, the thickness of the coating layer may be derived by measuring the total thickness of a coating layer-porous substrate separator and then subtracting the thickness of the porous substrate from the total thickness.

- Total thickness (A) of coating layer-porous substrate separator: an average thickness of a single separator derived by overlapping a separator in 10 layers, measuring each thickness at 5 random points in the TD direction by a thickness meter available from Mitutoyo, dividing the value by 5 to derive an average thickness of the 10-layer separator, and dividing the value by 10 again.
- Thickness (B) of porous substrate
- Thickness of coating layer: (A-B)/2 (when a coating layer is coated on both surfaces of the porous substrate) or (A-B) (when a coating layer is coated on one surface of the porous substrate)

The inorganic particles are comprised in the coating layer and serve to suppress deformation or shrinkage of the separator by heat discharged from a battery. The inorganic particles are any inorganic particles commonly used in the art, and are not particularly limited. For example, the inorganic particles may comprise one or two or more of metal oxides, metal nitrides, metal carbides, metal carbonates, metal hydroxides, and metal carbonitrides. A specific example thereof may comprise one or two or more of alumina, aluminum hydroxide, silica, barium oxide, titanium oxide, magnesium oxide, magnesium hydroxide, clay, glass powder, boehmite, and pseudo-boehmite. The pseudo-boehmite is represented by the chemical formula AlO(OH), and refers to a material which has a high moisture content to have a microcrystalline boehmite-like structure. As a preferred example, the inorganic particles may be a metal hydroxide such as boehmite or pseudo-boehmite, considering battery stability, but is not necessarily limited thereto.

The average particle diameter of the inorganic particles comprised in the coating layer of the separator according to the embodiment and/or the inorganic particles comprised in the coating layer of the separator used in Gc measurement is not particularly limited, and for example, may be 10 nm to 5 um, 10 nm to 1 um, 10 nm to 500 nm, 100 nm to 500 nm, 200 nm to 400 nm, or about 300 nm.

The particulate polymer binder may serve to impart electrode adhesion to the separator when it is comprised in the coating layer. The particulate polymer binder may be any particulate polymer binder commonly used in the art, and is not particularly limited. For example, the particulate polymer binder may comprise a particulate acryl-based binder, and a non-limiting example of the acryl-based binder may be a partially crosslinked particulate acryl-based binder, a partially not-crosslinked particulate acryl-based binder, or a particulate acryl-based binder having a core-shell structure.

The particulate acryl-based binder having a core-shell structure may be, for example, a polymerized binder of an acryl-based monomer and other comonomers and a crosslinking agent as required comprised on the surface of crosslinked particles or a core rubber.

The particulate acryl-based binder may comprise a repeating unit derived from an acryl-based monomer, and a non-limiting example of the acryl-based monomer may comprise an acryl-based monomer having a cyano group, an acryl-based monomer having a carboxyl group, and an acryl-based monomer having an alkyl group having 1 to 14 carbon atoms.

A non-limiting example of the acryl-based monomer having a cyano group may comprise (meth)acrylonitrile, 2-(vinyloxy)ethanenitrile, and 2-(vinyloxy)propanenitrile.

A non-limiting example of the acryl-based monomer having a carboxyl group may comprise (meth)acrylic acid, 2-(meth)acryloyloxy acetic acid, 3-(meth)acryloyloxy propyl acid, 4-(meth)acryloyloxy butyric acid, acrylic acid dimer, itaconic acid, maleic acid, and a meleic anhydride.

The acryl-based monomer having an alkyl group having 1 to 14 carbon atoms may comprise methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethyllbutyl (meth)acrylate, 2-ethylhexyl (meth)acrylate, n-octyl (meth)acrylate, isooctyl (meth)acrylate, isononyl (meth)acrylate, lauryl (meth)acrylate, and tetradecyl (meth)acrylate.

The particulate acryl-based binder may comprise a repeating unit derived from a non-acryl-based monomer, in addition to a repeating unit derived from the acryl-based monomers, and a non-limiting example of the non-acryl-based monomer may comprise a styrene-based monomer, a butadiene-based monomer, and a vinyl-based monomer.

According to one embodiment, the particulate polymer binder may be provided in a larger amount than the particulate polymer binder commonly used in the art of separator, thereby imparting better electrode adhesion to the separator. However, when the particulate polymer binder is excessively large, heat resistance may be deteriorated and the thickness of the coating layer is excessively large so that it may be disadvantageous to secure battery energy density, and there may be a difficulty in forming a stack cell structure by thickness change after heat fusion with an electrode, and thus, appropriate adjustment is needed. According to an example, the particulate polymer binder may have a particle diameter D50 of more than 1 um and 10 um. When the particle diameter D50 of the particulate polymer binder is 1 um or less, the particulate polymer binder is embedded by the inorganic materials in the coating layer of a thin film, so that it may be difficult to secure sufficient electrode adhesion, and on the contrary, when D50 is more than 10 $\mu$m, the thickness of the coating layer may be excessively increased and it may be difficult to form a stack cell structure by a thickness change after heat fusion.

From this point of view, the particulate polymer binder may have a particle diameter D50 of, preferably more than 1 um and 8 um or less, more than 1 um and 7 um or less, more than 1 um and 6 $\mu$m or less, 1.5 um or more and 10 $\mu$m or less, 1.5 um or more and 8 um or less, 1.5 um or more and 7 um or less, 1.5 um or more and 6 um or less, 2 um or more and 10 um or less, 2 um or more and 8 um or less, 2 um or more and 7 um or less, 2 um or more and 6 um or less, 2.5 um or more and 10 um or less, 2.5 um or more and 8 um or less, 2.5 um or more and 7 $\mu$m or less, 2.5 $\mu$m or more and 6 $\mu$m or less, 2.8 um or more and 10 um or less, 2.8 um or more and 8 um or less, 2.8 $\mu$m or more and 7 um or less, or 2.8 um or more and 6 $\mu$m or less, but is not particularly limited thereto.

According to one embodiment, the particulate polymer binder may have a glass transition temperature Tg of 50 to 70°C, 55 to 70°C, 50 to 65°C, or 55 to 65°C. According to one embodiment, since the particulate polymer binder satisfying the glass transition temperature is advantages for being present by protruding out of the surface in a glass state at room temperature, electrode adhesion between an electrode and a separator may be further improved. In addition, the particulate polymer binder satisfying the glass transition temperature is present in a rubbery state in a temperature range of 60 to 100°C, 60 to 90°C, 70 to 100°C, or 70 to 90°C and pressure conditions of 1 to 20 kgf, 1 to 15 kgf, 5 to 20 kgf, or 5 to 15 kgf as dry fusion treatment conditions, when being dry fused without an electrolyte solution of a jelly roll of a separator-electrode, and thus, distortion or lifting between an electrode and a separator in a separator-electrode fusion treatment is prevented to solve the problem of misalignment between an electrode and a separator. Thus, the life characteristics and capacity characteristics of a battery may be expressed to the maximum.

When the aqueous polymer binder is comprised in the coating layer, the shrinkage at a high temperature of the separator may be decreased and desorption of the inorganic particles in the coating layer may be prevented. The aqueous particulate polymer binder may be any aqueous polymer binder commonly used in the art, and is not particularly limited. For example, the aqueous polymer binder may comprise one or two or more of hydroxypropyl methylcellulose (HPMC), hydroxyethyl methylcellulose (HEMC), hydroxyethyl cellulose (HEC), carboxymethyl cellulose (CMC), polyvinylpyrrolidone (PVP), polyvinyl alcohol (PVA), polyacrylate (PA), and polyacrylamide (PAM). Though not particularly limited, the aqueous polymer binder may be polyacrylamide for satisfying excellent heat resistance and electrode adhesion to be desired in one implementation.

The aqueous polymer binder may have a weight average molecular weight (Mw) of 200,000 g/mol to 300,000 g/mol, 250,000 g/mol to 300,000 g/mol, or about 270,000 g/mol.

The particulate polymer binder and the aqueous polymer binder may be independently of each other prepared by various known methods such as emulsion polymerization, suspension polymerization, solution polymerization, or bulk polymerization, and are not particularly limited.

According to one embodiment, when a particulate polymer binder is comprised in the coating layer, a ratio of the particle diameter D50 of the particulate polymer binder to the thickness of the coating layer may be 1 to 5. According to one embodiment, when the range of the ratio of the particle diameter D50 of the particulate polymer binder to the thickness of the coating layer is satisfied, the specific gravity of the particulate polymer binder present by protruding out of the surface of the coating layer may be increased to further increase electrode adhesion. Considering the above description, more preferably, the ratio of the particle diameter D50 of the particulate polymer binder to the thickness of the coating layer may be 1 to 3, 1 to 2.5, 1.5 to 5, 1.5 to 3, or 1.5 to 2.5.

According to one embodiment, when the coating layer comprises both the particulate polymer binder and the aqueous polymer binder as the polymer binder, the coating layer may comprise: 88 wt% or more of the inorganic particles, 1.6 to 8 wt% of the particulate polymer binder, and more than 0 wt% and 5 wt% or less of the aqueous polymer binder. The coating layer comprising the inorganic particles, the particulate polymer binder, and the aqueous polymer binder with the above composition may secure sufficient heat resistance with the inorganic particles and improve electrode adhesion with the particulate polymer binder. The content of the inorganic particles may be 88 to 95.3 wt%, 90 to 95.3 wt%, or more than 90 wt% and 95.3 wt% or less, but is not particularly limited. The content of the particulate polymer binder may be 1.7 to 8 wt%, 1.8 to 8 wt%, 1.6 to 7 wt%, 1.7 to 7 wt%, 1.8 to 7 wt%, 1.6 to 6.5 wt%, 1.7 to 6.5 wt%, or 1.8 to 6.5 wt%, but is not particularly limited. The content of the aqueous polymer binder may be more than 0 wt% and 4.5 wt% or less, more than 0 wt% and 4 wt% or less, more than 0 wt% and 3.5 wt% or less, 1 to 5 wt%, 1 to 4.5 wt%, 1 to 4 wt%, 1 to 3.5 wt%, 1.5 to 5 wt%, 1.5 to 4.5 wt%, 1.5 to 4 wt%, 1.5 to 3.5 wt%, 2 to 5 wt%, 2 to 4.5 wt%, 2 to 4 wt%, or 2 to 3.5 wt%, but is not particularly limited.

In addition, the coating layer may comprise other various components comprising an anti-settling agent known in the art as required, and it should be noted that other various components which is not particularly mentioned are not excluded.

The coating layer is only needed to be produced by a common production method of forming a coating layer on a separator known in the art, and is not particularly limited. According to one embodiment, water is added to a mixture of inorganic particles and a polymer binder, stirring is performed to prepare a coating solution slurry, and the prepared coating solution slurry is coated on one or both surfaces of a porous substrate by one or combined method of roll coating, spin coating, dip coating, bar coating, die coating, slit coating, and inkjet printing, thereby providing a coating layer on the porous substrate.

Though not particularly limited, according to one embodiment, a total thickness of a separator comprising a porous substrate; and a coating layer provided on one or both surfaces of the porous substrate may be 10 to 30 um or 10 to 20 um.

Though not particularly limited, the total thickness of the separator measured after fusing an electrode and the separator may be 10 to 20 um or 10 to 15 um.

The separator according to one embodiment of the embodiments described above has an effect of improving electrode adhesion while securing physical properties at a level equal to or higher than those of the existing separator, for example, sufficient heat resistance such as a heat shrinkage at a high temperature, sufficient air permeability, and the like. In particular, both excellent heat resistance and electrode adhesion may be satisfied without further providing a separate adhesive organic layer (thermal fusion layer).

As described above, as a result of improving electrode adhesion while securing physical properties at a level equal to or higher than those of the existing separator, for example, sufficient heat resistance such as a heat shrinkage at a high temperature, sufficient air permeability, and the like, the separator according to one implementation may solve a problem of misalignment which may occur between an electrode and a separator in a jelly roll during cell stacking, may solve a problem of battery life deterioration which may occur due to misalignment between an electrode and a separator, and may secure excellent stability even during battery operation.

The separator according to one embodiment of the embodiments described above has excellent heat resistance. The separator according to an embodiment may have heat shrinkages in both the MD direction and the TD direction of 5% or less as measured after standing at 150°C for 1 hour.

The separator according to one embodiment of the embodiments described above has excellent electrode adhesion. The separator according to one embodiment may have an average value of adhesive strength of 2 gf or more, the adhesive strength between a separator and an electrode being shown when the separator is placed between a positive electrode and a negative electrode and fused for 30 seconds under the temperature and pressure conditions of 80°C and 10 kgfcm$^{-2}$, and a specimen having a width of 15 mm is pulled at a speed of 300 mm/min using UTM equipment (UTM3345 available from INSTRON) to be peeled off. Otherwise, the separator according to one embodiment may have adhesive strength of more than 3.5 gf, 4.0 gf or more, 4.5 gf or more, 15.0 gf or less, 13.0 gf or less, or 10.0 gf or less.

The positive electrode and the negative electrode may be any positive electrode and negative electrode known in the art and is not particularly limited, but may be the following positive electrodes and negative electrodes.

The positive electrode may be, as a non-limiting example, a positive electrode having a thickness of 150 um provided by adding 94 wt% of LiCoO2 as a positive electrode active material, 2.5 wt% of polyvinylidene fluoride as a binder, and 3.5 wt% of carbon black as a conductive material to N-methyl-2-pyrrolidone (NMP) as a solvent, performing stirring, coating an aluminum foil having a thickness of 30 um with a uniform positive electrode slurry, and performing drying at a temperature of 120°C and pressing.

The negative electrode may be, as a non-limiting example, a negative electrode having a thickness of 150 um provided by adding 95 wt% of artificial graphite as a negative electrode active material, 3 wt% of acrylic latex having Tg of -52°C (solid content: 20 wt%) (product name: BM900B), and 2 wt% of carboxymethyl cellulose (CMC) as a thickener to water as a solvent, performing stirring, coating a copper foil having a thickness of 20 um with a uniform negative electrode slurry, and performing drying at a temperature of 120°C and pressing.

The separator according to one embodiment of the embodiments described above has excellent air permeability. In the separator according to one embodiment, a time it takes for 100 ml of air to pass through an area of 1 square inch of the separator, using a Gurley type air permeability meter equipment (Densometer available from Toyoseiki) in accordance with ASTM D 726 may be 200 s or less.

According to one embodiment, an electrochemical device comprising the separator according to one embodiment of the embodiments described above may be provided. The electrochemical device may be all known energy storage device, and is not particularly limited. According to an example, the electrochemical device may be a lithium secondary battery. The lithium secondary battery according to one embodiment may comprise the separator described above between a positive electrode and a negative electrode. Herein, the positive electrode and the negative electrode may be used without limitation as long as they are commonly used in the lithium secondary battery.

Hereinafter, the examples and the comparative examples will be described. However, the following examples are only an example of one implementation, and one implementation is not limited to the following examples.

**[Examples]**

**Example 1**

(Preparation of coating solution)

Water was added to a mixture of 95 wt% of boehmite particles having an average particle diameter of 300 nm, BET of 18 $m^2$/g, and a bulk density of 270 kg/$m^3$ as inorganic particles, 2 wt% of an acryl-based copolymer (D50): 3 um, Tg: 60°C) as a particulate polymer binder, and 3 wt% of polyacrylamide (PAM) having a weight average molecular weight of 270,000 g /mol as an aqueous polymer binder, and stirring was performed to prepare a coating solution slurry.

[Production of separator]

A polyolefin microporous substrate having a thickness of 9 um and a Gurley permeability of 126 s was used as a porous substrate, and both surfaces of the porous substrate was bar coated with the coating solution slurry prepared above at a speed of 5 m/min, dried with a hot air dryer at 40°C, and wound in a roll form to produce a separator. The produced separator was cut into a size of 20 cm long × 10 cm wide to prepare a sample.

**Examples 2 to 4**

Separators were produced under the same conditions as Example 1, except that in the preparation of a coating solution, water was added to a mixture in which boehmite particles having an average particle diameter of 300 nm, BET of 18 $m^2$/g, and a bulk density of 270 kg/$m^3$ as inorganic particles, an acryl-based copolymer (D50: following the "particle diameter D50 of the particulate polymer binder" described in Table 1, Tg: 60°C) as a particulate polymer binder, and polyacrylamide (PAM) having a weight average molecular weight of 270,000 g/mol as an aqueous polymer binder were mixed at wt% listed in Table 1 and stirring was performed to prepare a coating solution slurry.

**Example 5**

A separator was produced under the same conditions as Example 1, except that in the preparation of a coating solution, water was added to a mixture in which aluminum hydroxide particles having an average particle diameter of 300 nm, BET of 20 $m^2$/g, and a bulk density of 250 kg/$m^3$ as inorganic particles, an acryl-based copolymer (D50: following the "particle diameter D50 of the particulate polymer binder" described in Table 1, Tg: 60°C) as a particulate polymer binder, and polyacrylamide having a weight average molecular weight of 270,000 g/mol as an aqueous polymer binder were mixed at wt% listed in Table 1 and stirring was performed to prepare a coating solution slurry.

**REF.**

A separator was produced under the same conditions as Example 1, except that an organic polymer particles were not added in the preparation of the coating solution, and water was added to a mixture in which boehmite particles having an average particle diameter of 300 nm, BET of 18 $m^2$/g, and a bulk density of 270 kg/$m^3$ as inorganic particles and polyacrylamide (PAM) having a weight average molecular weight of 270,000 g/mol as an aqueous polymer binder were mixed at wt% listed in Table 1 and stirring was performed to prepare a coating solution slurry.

**Comparative Example 1 and 2**

A separator was produced under the same conditions as Example 1, except that in the preparation of a coating solution, water was added to a mixture in which boehmite particles having an average particle diameter of 300 nm, BET of 18 $m^2$/g, and a bulk density of 270 kg/$m^3$ as inorganic particles, an acryl-based copolymer (D50: following the "particle diameter D50 of organic polymer particles" described in Table 1, Tg: 60°C) as a particulate polymer binder and polyacrylamide (PAM) having a weight average molecular weight of 270,000 g/mol as an aqueous polymer binder were mixed at wt% listed in Table 1 and stirring was performed to prepare a coating solution slurry.

**Comparative Example 3**

Separators were produced under the same conditions as Example 1, except that in the preparation of a coating solution, water was added to a mixture in which boehmite particles having an average particle diameter of 300 nm, BET of 18 $m^2$/g, and a bulk density of 270 kg/$m^3$ as inorganic particles, an acryl-based copolymer (D50: following the "particle diameter D50 of organic polymer particles" described in Table 1, Tg: 60°C) (HES-202 available from Hansol Chemical) as a particulate polymer binder and polyacrylamide (PAM) having a weight average molecular weight of 270,000 g/mol as an aqueous polymer binder were mixed at wt% listed in Table 1 and stirring was performed to prepare a coating solution slurry.

**Evaluation Example: Evaluation of heat shrinkage and electrode adhesion**

In the following Table 1, "particle diameter D50 of particulate polymer binder" is results derived from particle size distribution results analyzed using Multisizer 4e Coulter counter available from Beckman Coulter by collecting a sample in accordance with the standard of KS A ISO 13320-1 for the prepared particulate polymer binder.

In the following Table 1, "thickness of coating separator" is results of measuring the total thickness of the coating layer-porous substrate separator produced in each of the examples and comparative examples, in which each of the produced separators was overlapped in 10 layers, each thickness was measured at 5 random points in the TD direction by a thickness meter available from Mitutoyo, the value was divided by 5 to derive an average thickness of the 10-layer separator, and the value was divided by 10 again to determine an average thickness of a single separator.

In the following Table 1, "thickness of coating layer" is results of measuring each of the coating layer thickness coated on both surfaces of the porous substrate of the separator produced in each of the examples and the comparative examples, in which the thickness of the porous substrate was subtracted from the total thickness of the coating layer-porous substrate separator measured by the following method, and the value was divided by 2 to determine the thickness of the coating layer.

- Total thickness (A) of coating layer-porous substrate separator: an average thickness of a single separator derived by overlapping each produced separator in 10 layers, measuring each thickness at 5 random points in the TD direction by a thickness meter available from Mitutoyo, dividing the value by 5 to derive an average thickness of the 10-layer separator, and dividing the value by 10 again.
- Thickness (B) of porous substrate: 9 um
- Thickness of coating layer: (A-B)/2

In the following Table 1, "surface gloss (GU) at 85° on the surface of the coating layer" is a surface gloss at 85° on the surface of the separator coating layer produced in each of the examples and the comparative examples. The surface gloss was measured at each of 5 random points on the surface of the separator coating layer with a surface gloss measuring equipment (Micro TRI-Gloss, BYK), and was derived as an average value.

In the following Table 1, "Ga/Gc" was derived by substituting the surface gloss at 85° on the surface of the separator coating layer of each of the examples and the comparative examples into Ga, and a surface gloss at 85° on the surface of REF. separator coating layer to which organic polymer particles were not added into Gc.

In the following Table 1, the "Gurley permeability" was measured as a time it takes for 100 ml of air to pass through an area of 1 square inch of the separator produced in each of the examples and the comparative examples in seconds, using air permeability metering equipment (Densometer available from Toyoseiki) in accordance with ASTM D726.

[Table 1]

| | wt% | | | Particle diameter D50 (μm) of particulate polymer binder | Thickness (μm) of coating layer | Particle diameter D50 of particulate polymer binder/ thickness of coating layer | Thickness (μm) of coating separator | surface gloss (GU) at 85° on coating layer surface | Ga/Gc | Gurley permeability (s) |
|---|---|---|---|---|---|---|---|---|---|---|
| | Inorganic particles | Particulate polymer binder | Aqueous polymer binder | | | | | | | |
| REF. | 97 | – | 3 | – | 1.5 | – | 12 | 77.2 | – | 168 |
| Example 1 | 95 | 2 | 3 | 3 | 1.9 | 1.6 | 12.8 | 48.3 | 0.626 | 164 |
| Example 2 | 95 | 2 | 3 | 5 | 2.4 | 2.1 | 13.8 | 51.0 | 0.661 | 161 |
| Example 3 | 93 | 4 | 3 | 5 | 2.55 | 2.0 | 14.1 | 28.6 | 0.370 | 169 |
| Example 4 | 91 | 6 | 3 | 5 | 3 | 1.7 | 15.0 | 24.1 | 0.312 | 169 |
| Example 5 | 95 | 2 | 3 | 3 | 1.9 | 1.6 | 13.0 | 50.3 | 0.655 | 162 |
| Comparative Example 1 | 95.5 | 1.5 | 3: | 5 | 2.35 | 2.1 | 13.7 | 58.5 | 0.758 | 163 |
| Comparative Example 2 | 87 | 10 | 3 | 5 | 2.9 | 1.7 | 14.8 | 15.3 | 0.198 | 157 |
| Comparative Example 3 | 91 | 6 | 3 | 0.5 | 1.6 | 0.3 | 12.2 | 73.2 | 0.948 | 175 |

In the following Table 2, "heat shrinkage at 150°C" was derived by cutting the separator of each of the examples and the comparative examples into a size of 10 cm×10 cm, and substituting the lengths of the separator measured before and after allowing the separator to stand at 150°C for 1 hour into the following equation. The heat shrinkage was measured in the MD direction (mechanical direction) and the TD direction (transverse direction), respectively.

$$\text{Heat shrinkage (\%)} = (\text{length before standing} - \text{length after standing})/\text{length before stand}) \times 100$$

In the following Table 2, "thickness of coating separator after fusion" refers to the total thickness of the coating layer-porous substrate separator after placing the separator produced in each of the examples and the comparative examples between a positive electrode and a negative electrode and performing a fusion treatment for 30 seconds under the temperature and pressure conditions of 80°C and 10 kgfcm$^{-2}$, and "electrode adhesion" was measured as adhesion between the separator and the electrode by performing a fusion treatment as described above in accordance with ASTM D 903 and pulling a specimen having a width of 15 mm at a speed of 300 mm/min using UTM equipment (UTM3345 available from INSTRON) and was derived as an average value of the adhesive strength shown in peeling off.

As the positive electrode, a positive electrode provided as follows was used. 94 wt% of $LiCoO_2$ as a positive active material, 2.5 wt% of polyvinylidene fluoride as a binder, and 3.5 wt% of carbon black as a conductive agent were added to N-methyl-2-pyrrolidone (NMP) as a solvent and stirring was performed to prepare a uniform positive electrode slurry. An aluminum foil having a thickness of 30 $\mu$m was coated with the prepared positive electrode slurry, dried at a temperature of 120°C, and pressed to produce a positive electrode plate having a thickness of 150 $\mu$m.

As the negative electrode, a negative electrode provided as follows was used. 95 wt% of artificial graphite as a negative electrode active material, 3 wt% of acrylic latex having Tg of -52°C (solid content: 20 wt%) (product name: BM900B 900B), and 2 wt% of carboxymethyl cellulose (CMC) as a thickener were added to water as a solvent, and stirring was performed to produce a uniform negative electrode slurry. A copper foil having a thickness of 20 $\mu$m was coated with the prepared negative electrode slurry, dried at a temperature of 120°C, and pressed to produce a negative electrode plate having a thickness of 150 $\mu$m.

[Table 2]

|  | Heat shrinkage at 150°C (MD/TD, %) | Thickness of coating separator after fusion ($\mu$m) | Electrode adhesive strength (gf) |
|---|---|---|---|
| REF. | 2.0/1.5 | 12 | No adhesive strength |
| Example 1 | 2.5/2.5 | 12.1 | 4.8 |
| Example 2 | 2.5/2.5 | 12.2 | 5.8 |
| Example 3 | 2.5/2.0 | 12.4 | 7.3 |
| Example 4 | 3.0/2.0 | 12.5 | 9.7 |
| Example 5 | 2.5/2.5 | 12.1 | 5.2 |
| Comparative Example 1 | 2.5/2.5 | 12.1 | No adhesive strength |
| Comparative Example 2 | 11/21 | 12.9 | 3.5 |
| Comparative Example 3 | 18/17 | 12.1 | No adhesive strength |

Referring to the results of Tables 1 and 2, Examples 1 to 5 satisfied the Ga/Gc value range defined in one implementation, and as a result, achieved both excellent heat shrinkage and excellent electrode adhesive strength.

However, the REF. separator did not comprise the particulate polymer binder in the coating layer, and as a result, caused natural peeling off when binding the separator to the upper zig at 180° for adhesive strength measurement experiment after applying heat/pressure, and thus, the adhesive strength was not able to be measured (no adhesive strength)

In Comparative Example 1, the content of the particulate polymer binder was excessively low as compared with the inorganic particles, and as a result, the Ga/Gc value was more than 0.75, and thus, when the separator was bound to the upper zig at 180° for adhesive strength measurement experiment after applying heat/pressure, natural peeling off occurred, and thus, the adhesive strength was not able to be measured (no adhesive strength).

In Comparative Example 2, the content of the particulate polymer binder was excessively high as compared with the inorganic particles, and as a result, the Ga/Gc value was less than 0.2, and thus, heat shrinkage was poor. In addition, it was confirmed that the electrode adhesion was lowered to 4.0 or less due to the release of the adhesive binder.

In Comparative Example 3, the particle diameter D50 of the particulate polymer binder was excessively small, and as a result, the Ga/Gc value was more than 0.75, and the ratio of the particle diameter D50 of the particulate polymer binder to the thickness of the coating layer was less than 1, and thus, heat shrinkage was poor, and when the separator was bound to the upper zig at 180° for adhesive strength measurement experiment after applying heat/pressure, natural peeling off occurred, and thus, the adhesive strength was not able to be measured (no adhesive strength).

The separator according to one implementation satisfies a surface gloss ratio according to Equation (1), thereby having improved electrode adhesion while securing sufficient heat resistance such as a heat shrinkage at a high temperature. In particular, both excellent heat resistance and electrode adhesion may be satisfied without further providing a separate adhesive organic layer (thermal fusion layer).

According to one embodiment, in a separator comprising a porous substrate and a coating layer provided on one or both surfaces of the porous substrate, the coating layer comprises inorganic particles and a polymer binder, and the separator having a Ga/Gc value represented by the following Equation (1) of 0.2 to 0.75 has excellent heat resistance and electron adhesion.

$$(1) \quad Ga/Gc$$

wherein Ga is a surface gloss of the coating layer, and Gc is a surface gloss of a coating layer of a separator in which the coating layer comprising 90.0 to 99.9 wt% of inorganic particles having an average particle diameter of 100 to 500 nm, BET of 15 to 20 $m^2/g$, and a bulk density of 200 to 300$kg/m^3$ and 0.1 to 10 wt% of an aqueous polymer binder is provided at a thickness of 3 um or less on the porous substrate.

The separator according to one implementation may secure a sufficient heat shrinkage at a high temperature. The separator according to an embodiment may have heat shrinkages in both the MD direction and the TD direction of 5% or less as measured after standing at 150°C for 1 hour.

The separator according to one implementation may have improved electrode adhesion while securing a sufficient heat shrinkage at a high temperature as described above.

In addition, the separator according to one implementation may secure air permeability at a level equal to or higher than that of the existing separator while also securing a sufficient heat shrinkage and improved electrode adhesion.

Like the effect described above, according to one implementation, electrode adhesion may be improved while securing physical properties at a level equal to or higher than those of the existing separator, for example, sufficient heat resistance such as a heat shrinkage at a high temperature, sufficient air permeability, and the like, without further providing a separate adhesive organic layer (thermal fusion layer).

As described above, as a result of improving electrode adhesion while securing physical properties at a level equal to or higher than those of the existing separator, for example, sufficient heat resistance such as a heat shrinkage at a high temperature, sufficient air permeability, and the like, the separator according to one implementation may solve a problem of misalignment which may occur between an electrode and a separator in a jelly roll during cell stacking, may solve a problem of battery life deterioration which may occur due to misalignment between an electrode and a separator, and may secure excellent stability even during battery operation.

Other exemplary non-limiting embodiments of the present invention include:

Embodiment 1. A separator comprising: a porous substrate; and a coating layer provided on one or both surfaces of the porous substrate,

wherein the coating layer comprises inorganic particles and a polymer binder, and
a Ga/Gc value represented by the following Equation (1) is 0.2 to 0.75:

$$(1) \quad Ga/Gc$$

wherein Ga is a surface gloss of the coating layer, and Gc is a surface gloss of a coating layer of a separator in which the coating layer comprising 90.0 to 99.9 wt% of inorganic particles having an average particle diameter of 100 to 500 nm, BET of 15 to 20 $m^2/g$, and a bulk density of 200 to 300$kg/m^3$ and 0.1 to 10 wt% of an aqueous polymer binder is provided at a thickness of 3 um or less on the porous substrate.

Embodiment 2. The Ga value may be 16 to 55 GU.

Embodiment 3. The polymer binder comprises any one or more of a particulate polymer binder and an aqueous polymer binder.

Embodiment 4. When the coating layer comprises the particulate polymer binder, a ratio of a particle diameter D50 of the particulate polymer binder to a thickness of the coating layer is 1 to 5.

Embodiment 5. When the coating layer comprises the particulate polymer binder, a particle diameter D50 of the particulate polymer binder is more than 1 um and 10 um or less.

Embodiment 6. When the coating layer comprises the particulate polymer binder, a glass transition temperature (Tg) of the particulate polymer binder is 50 to 70°C.

Embodiment 7. When the coating layer comprises both the particulate polymer binder and the aqueous polymer binder, the coating layer comprises: 88 wt% or more of the inorganic particles, 1.6 to 8 wt% of the particulate polymer binder, and more than 0 wt% and 5 wt% or less of the aqueous polymer binder.

Embodiment 8. The aqueous polymer binder comprises one or two or more of hydroxypropyl methylcellulose (HPMC), hydroxyethyl methylcellulose (HEMC), hydroxyethyl cellulose (HEC), carboxymethyl cellulose (CMC), polyvinylpyrrolidone (PVP), polyvinyl alcohol (PVA), polyacrylate (PA), and polyacrylamide (PAM).

Embodiment 9. A heat shrinkage in both the MD direction and the TD direction of 5% or less as measured after standing at 150°C for 1 hour.

Embodiment 10. The inorganic particles are any one or more selected from the group consisting of metal oxides, metal nitrides, metal carbides, metal carbonates, metal hydroxides, and metal carbonitrides, preferably the inorganic particles comprise boehmite.

Embodiment 11. The particulate polymer binder comprises an acryl-based polymer.

Embodiment 12. the surface gloss is a surface gloss at 20° to 95° on a surface of the coating layer, preferably the surface gloss is a surface gloss at 70° to 90° on a surface of the coating layer, more preferably the surface gloss is a surface gloss at 85° on a surface of the coating layer.

Embodiment 13. An electrochemical device comprising the separator according to any of the embodiments.

## Claims

1. A separator comprising: a porous substrate; and a coating layer provided on one or both surfaces of the porous substrate,

   wherein the coating layer comprises inorganic particles and a polymer binder, and
   a Ga/Gc value represented by the following Equation (1) is 0.2 to 0.75:

$$(1) \quad Ga/Gc$$

   wherein Ga is a surface gloss of the coating layer, and Gc is a surface gloss of a coating layer of a separator in which the coating layer comprising 90.0 to 99.9 wt% of inorganic particles having an average particle diameter of 100 to 500 nm, BET of 15 to 20 $m^2/g$, and a bulk density of 200 to 300kg/$m^3$ and 0.1 to 10 wt% of an aqueous polymer binder is provided at a thickness of 3 um or less on the porous substrate.

2. The separator of claim 1, wherein the Ga value is 16 to 55 GU.

3. The separator of claim 1 or 2, wherein the polymer binder comprises any one or more of a particulate polymer binder and an aqueous polymer binder.

4. The separator of claim 3, wherein when the coating layer comprises the particulate polymer binder, a ratio of a particle diameter D50 of the particulate polymer binder to a thickness of the coating layer is 1 to 5.

5. The separator of claim 3 or 4, wherein when the coating layer comprises the particulate polymer binder, a particle diameter D50 of the particulate polymer binder is more than 1 um and 10 um or less.

6. The separator of any of claims 3 to 5, wherein when the coating layer comprises the particulate polymer binder, a glass transition temperature (Tg) of the particulate polymer binder is 50 to 70°C.

7. The separator of any of claims 3 to 6, wherein when the coating layer comprises both the particulate polymer binder

and the aqueous polymer binder, the coating layer comprises: 88 wt% or more of the inorganic particles, 1.6 to 8 wt% of the particulate polymer binder, and more than 0 wt% and 5 wt% or less of the aqueous polymer binder.

8. The separator of any of claims 3 to 7, wherein the aqueous polymer binder comprises one or two or more of hydroxypropyl methylcellulose (HPMC), hydroxyethyl methylcellulose (HEMC), hydroxyethyl cellulose (HEC), carboxymethyl cellulose (CMC), polyvinylpyrrolidone (PVP), polyvinyl alcohol (PVA), polyacrylate (PA), and polyacrylamide (PAM).

9. The separator of any of claims 1 to 8, wherein a heat shrinkage in both the MD direction and the TD direction of 5% or less as measured after standing at 150°C for 1 hour.

10. The separator of any of claims 1 to 9, wherein the inorganic particles are any one or more selected from the group consisting of metal oxides, metal nitrides, metal carbides, metal carbonates, metal hydroxides, and metal carbonitrides,

preferably the inorganic particles comprise boehmite.

11. The separator of any of claims 3 to 10, wherein the particulate polymer binder comprises an acryl-based polymer.

12. The separator of any of claims 1 to 11, wherein the surface gloss is a surface gloss at 20° to 95° on a surface of the coating layer,

preferably the surface gloss is a surface gloss at 70° to 90° on a surface of the coating layer,
more preferably the surface gloss is a surface gloss at 85° on a surface of the coating layer.

13. An electrochemical device comprising the separator of any of claims 1 to 12.